# EUROPÄISCHE PATENTANMELDUNG

(11) **EP 3 098 128 A1**
(43) Veröffentlichungstag der Anmeldung: **30.11.2016**
(21) Anmeldenummer: 16169706.5
(22) Anmeldetag: 13.05.2016
(51) Int. Cl.: B60T 13/58, B60T 10/04, B60T 13/66

(54) **VERFAHREN ZUR ANSTEUERUNG EINES BREMSSYSTEMS**

(30) Priorität: 28.05.2015 DE 102015209774
(71) Anmelder: Deere & Company, Moline, IL 61265 (US)
(72) Erfinder: Müller, David, 76297 Stutensee (DE); Reinards, Marco, 67269 Grünstadt (DE)
(74) Vertreter: Reichert, Christian

(57) **Zusammenfassung**

Die Erfindung betrifft ein Verfahren zur Ansteuerung eines Bremssystems in einem landwirtschaftlichen Arbeitsfahrzeug, wobei das Arbeitsfahrzeug einen Antriebsstrang mit einem Antriebsmotor, ein dem Antriebsmotor nachgeschaltetes Getriebe mit verstellbarer Übersetzung, über das eine von dem Verbrennungsmotor erzeugte Antriebsleistung auf eine Antriebsachse übertragbar ist, eine Betriebsbremseinrichtung und zumindest eine Hilfsbremseinrichtung umfasst.

## Beschreibung

Die Erfindung betrifft ein Verfahren zur Ansteuerung eines Bremssystems in einem landwirtschaftlichen Arbeitsfahrzeug, wobei das Arbeitsfahrzeug einen Antriebsstrang mit einem Antriebsmotor, ein dem Antriebsmotor nachgeschaltetes Getriebe mit verstellbarer Übersetzung, über das eine von dem Verbrennungsmotor erzeugte Antriebsleistung auf eine Antriebsachse übertragbar ist, eine Betriebsbremseinrichtung und zumindest eine Hilfsbremseinrichtung umfasst.

Prinzipbedingt ist die Betriebsbremseinrichtung eines landwirtschaftlichen Arbeitsfahrzeugs verschleißbehaftet. Regelmäßig ist die Betriebsbremseinrichtung als hydraulisch betätigte und ölgekühlte Scheibenbremse ausgeführt, deren lamellenartig angeordnete Reibbeläge innerhalb des Getriebe- oder Differentialgehäuse angeordnet sind. Hierdurch erfolgt eine Ölkühlung über das Getriebeöl, welches seinerseits Teil des Hydraulikölkreislaufs sein kann. Der Nachteil dieser in das Getriebe- oder Differentialgehäuse integrierten Betriebsbremseinrichtung besteht in der wartungstechnischen Herausforderung in dem Fall, in dem ein Austausch der Reibbeläge erfolgen muss. Dies kann in der Regel nur über einen Ausbau des Getriebes oder Differentials erfolgen.

Zur Reduktion von reparatur- und wartungsbedingten Stillstandzeiten von landwirtschaftlichen Arbeitsfahrzeugen ist es notwendig, wartungsintensive Komponenten wie eine Betriebsbremseinrichtung durch zumindest wartungsarme Komponenten zu entlasten oder zu ersetzen. Ein Entlasten hätte zumindest den Vorteil, dass das Wartungsintervall der wartungsintensiven Komponente verlängert wird.

Bekannt sind im Stand der Technik Hilfsbremseinrichtung, die nach verschiedenen physikalischen Wirkprinzipien arbeiten. Zu nennen sind hier eine variable Turbinengeometrie bei einem Abgasturbolader, ein hydrostatischer Retarder, eine Wirbelstrombremse, eine Abgasbremse, eine Hydrauliksystembremse oder eine generatorisch betriebene elektrische Antriebsachse. Die zusätzliche Verfügbarkeit einer Hilfsbremseinrichtung kann die Lebensdauer beziehungsweise das Wartungsintervall der Betriebsbremseinrichtung der Arbeitsmaschine signifikant verlängern, da deren Einsatz, sowohl bezüglich der Dauer als auch der Häufigkeit, nämlich insbesondere im verschleißfördernden Transportgeschwindigkeitsbereich reduziert wird.

Ausgehend hiervon besteht die Aufgabe der vorliegenden Erfindung darin, ein Verfahren bereitzustellen, das den Einsatz einer Betriebsbremseinrichtung und zumindest einer Hilfsbremseinrichtung derart aufeinander abstimmt, dass die Lebensdauer der Betriebsbremseinrichtung erhöht wird.

Die Aufgabe wird gelöst durch ein Verfahren zur Ansteuerung eines Bremssystems in einem landwirtschaftlichen Arbeitsfahrzeug, wobei das Arbeitsfahrzeug einen Antriebsstrang mit einem Antriebsmotor, ein dem Antriebsmotor nachgeschaltetes Getriebe mit verstellbarer Übersetzung, über das eine von dem Antriebsmotor erzeugte Antriebsleistung auf eine Antriebsachse übertragbar ist, eine Betriebsbremseinrichtung und zumindest eine Hilfsbremseinrichtung und eine Betätigungseinrichtung, mittels der eine eine Bremsverzögerung charakterisierende Verzögerungsgröße aₛₒₗₗ des Arbeitsfahrzeugs auf die Betriebsbremseinrichtung und die zumindest eine Hilfsbremseinrichtung kommandiert werden kann, umfasst wobei über die Betätigungseinrichtung die zumindest eine Hilfsbremseinrichtung solange prioritär gegenüber der Betriebsbremseinrichtung angesteuert wird, solange die von der zumindest einen Hilfsbremseinrichtung zur Verfügung gestellte Verzögerungsgröße aₐᵤₓ die kommandierte Verzögerungsgröße aₛₒₗₗ zu decken vermag und eine Ansteuerung der Betriebsbremseinrichtung erst erfolgt, wenn die kommandierte Verzögerungsgröße aₛₒₗₗ die maximale durch die zumindest eine Hilfsbremseinrichtung erreichbare Verzögerungsgröße aₐᵤₓ übersteigt.

Durch das erfindungsgemäße Verfahren wird eine integrierte Regelung der Betriebsbremseinrichtung und der zumindest einen Hilfsbremseinrichtung bereitgestellt, um eine effiziente Anwendung der Systeme im Verbund zu erreichen. Weiterhin wird durch das erfindungsgemäße Verfahren ein modular aufgebauter Ansatz zur Regelung zumindest eines Hilfsbremssystems mit variablem Komplexitätsgrades bereitgestellt, einschließlich dessen Implementierung in eine Gesamtfahrzeugsteuerung.

Bevorzugt umfasst die Betätigungseinrichtung durch eine Bedienperson des Arbeitsfahrzeugs aktivierbare Bedienmittel. Hierbei sind die Bedienmittel in einer einfachsten Ausgestaltung als zusätzlich installierter Bedienhebel ausgeführt, beispielsweise als separater Hilfsbremshebel oder als Aktivierung-/Deaktivierungsschalter für ein Hilfsbremssystem. In einer weiteren Ausgestaltung werden die Bedienmittel durch bestehende Bedienelemente des Arbeitsfahrzeugs gebildet, beispielsweise ein Bremspedal oder einen Fahrhebel.

Bevorzugt prägt das zumindest eine Hilfsbremskraftsystem seine Bremsleistung einer Kurbelwelle des Antriebsmotors auf. Hierdurch ist gewährleistet, dass die Bremsleistung jedenfalls über den Antriebsmotor und das sich anschließende Getriebe auf Antriebsräder des Arbeitsfahrzeugs übertragen werden.

Bevorzugt wird, zumindest während eines der Hilfsbremssysteme prioritär angesteuert wird, eine Übersetzung des Getriebes in Richtung einer größeren Übersetzung verstellt. Hierbei ist unter größerer Übersetzung zu verstehen, dass bei gleichbleibender Drehzahl bzw. Geschwindigkeit der Antriebsräder eine höhere Drehzahl des Antriebsmotors anliegt.

Bevorzugt umfasst das Arbeitsfahrzeug eine elektronische Steuereinrichtung, wobei die elektronische Steuereinrichtung das zumindest eine Hilfskraftbremssystem bei Überschreitung einer Drehzahlgrenze des Antriebsmotors bei gleichzeitiger Unterschreitung einer Drehmomentgrenze des Antriebsmotors ansteuert. Hierdurch lässt sich in einfacher Weise ein Überlast Drehzahlschutz für den Antriebsmotor darstellen.

Das erfindungsgemäße Verfahren wird anhand der nachfolgenden Figuren erläutern. Hierin zeigen
- Figur 1: ein landwirtschaftliches Arbeitsfahrzeug und
- Figur 2: ein Blockdiagramm von Komponenten zur Ausführung des erfindungsgemäßen Verfahrens.

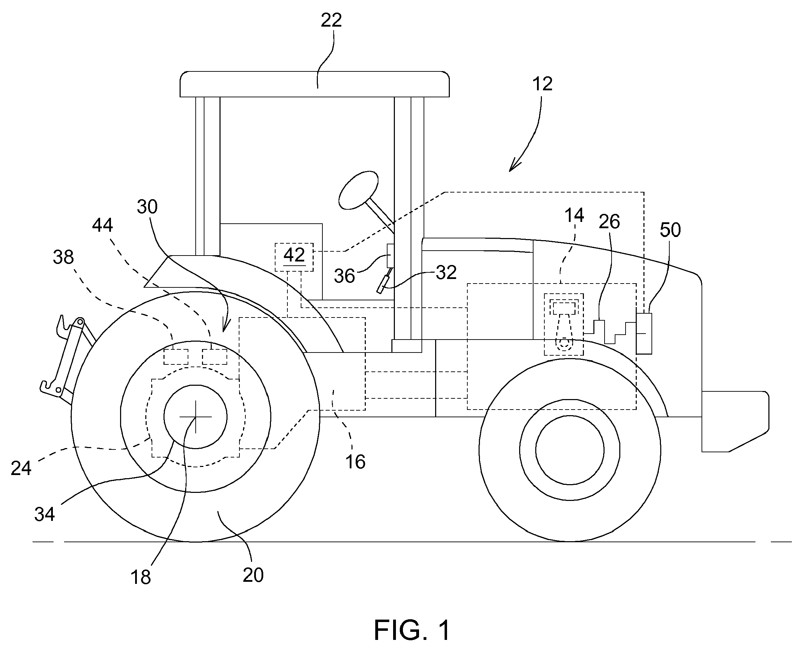

Die Figur 1 zeigt ein landwirtschaftliches Arbeitsfahrzeug 10 in Gestalt eines Traktors. Das Arbeitsfahrzeug 10 umfasst einen Fahrantriebsstrang 12 bestehend aus einem Antriebsmotor 14, einem Getriebe 16 mit verstellbarer Übersetzung und einer Antriebsachse 18 mit Antriebsrädern 20. Bei dem Getriebe kann es sich um ein Stufenlosgetriebe, ein Parallelschaltgetriebe, ein Umlaufrädergetriebe oder automatisiertes Schaltgetriebe handeln. Ferner weist das Arbeitsfahrzeug 10 eine Betriebsbremseinrichtung 30 auf, die eine in einer Kabine 22 im Zugriffsbereich einer sich dort aufhaltenden Bedienperson angeordnete Betätigungseinrichtung 32 beispielsweise in Form eines Bremspedals und eine Bremseinheit 34 zum Aufbringen eines Bremsmoments auf die Antriebsachse 18 umfasst, die bei Betätigung das Bremsmoment auf die momentan befahrene Bodenoberfläche überträgt. Die Betätigungseinrichtung 32 kann zusätzlich oder alternativ einen Fahrhebel oder einen Handgashebel umfassen. Die Bremseinheit 34 kann beispielsweise als nasslaufende Lamellenbremse ausgeführt sein. Ferner kann die Bremseinheit 34 in einem Differentialgehäuse 24 angeordnet sein und damit auf die Antriebsachse 18 wirken.

Eine Betätigung der Betriebsbremseinrichtung 30 kann in herkömmlicher Weise erfolgen, nämlich indem die Bedienperson die Betätigungseinrichtung 32 in Form eines Bremspedals betätigt und von einer Hydraulikpumpe des Arbeitsfahrzeugs 10 bereitgestelltes Drucköl mit einem Bremsdruck der Bremseinheit 34 zur Verfügung steht. Die bei Betätigung der Betriebsbremseinrichtung 30 eingenommene Stellung des Bremspedals 32 kann mit einem Positionssensor 36, der erzeugte Bremsdruck kann mit einem Drucksensor 38 und die erzeugte Bremsverzögerung des Arbeitsfahrzeugs 10 kann mit einem Beschleunigungssensor 40 erfasst werden. Ferner ist eine elektronische Kontrolleinheit 42 vorgesehen, die mit der Antriebsmotor 14, der Getriebevorrichtung 16, der ersten Betriebsbremseinrichtung 30 und den Sensoren 36, 38, 40 in einer Datenaustausch- und Steuerungsverbindung steht.

Die elektronische Kontrolleinheit 42 kann einen oder mehrere Mikrokontroller 42₁, 42₂ umfassen, wobei zumindest ein Mikrokontroller aus den Werten Stellung des Bremspedals 32, erzeugter Bremsdruck und erzeugte Bremsverzögerung des Arbeitsfahrzeugs 10 eine eine Bremsverzögerung charakterisierende Verzögerungsgröße aₛₒₗₗ des Arbeitsfahrzeugs 10 errechnet.

Ferner zeigt die Figur 1, dass das Arbeitsfahrzeug 10 ein Hilfsbremseinrichtung 50 umfasst, die in einer ersten Ausgestaltung des Arbeitsfahrzeugs 10, auf die das erfindungsgemäße Verfahren zur Ansteuerung eines Bremssystems anwendbar ist, als Retarder ausgebildet ist. Der Retarder kann nach einem hydrostatischen Wirkprinzip arbeiten und in einem vorderen Bereich an dem Antriebsmotor 14 angeordnet sein und von einer Kurbelwelle 26 des Antriebsmotors 14 angetrieben werden. Eine Betätigung der Hilfsbremseinrichtung 50 kann durch separate in der Kabine 22 angeordnete Bedienmittel erfolgen, die vorliegend allerdings nicht dargestellt sind. Alternativ kann eine Betätigung der Hilfsbremseinrichtung 50 durch die bereits im Zusammenhang mit der Betriebsbremseinrichtung 30 beschriebene Betätigungseinrichtung 32 erfolgen.

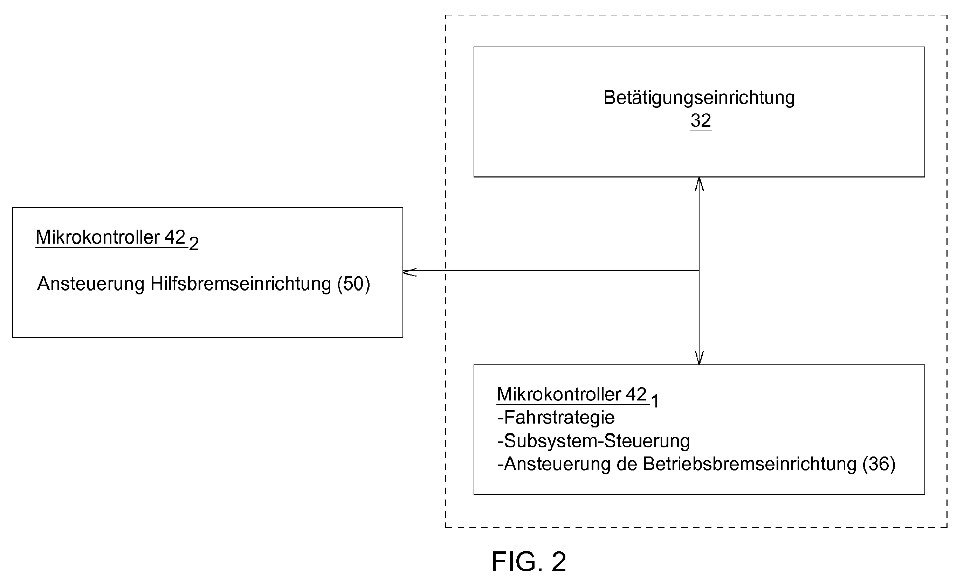

Die Figur 2 zeigt schematisch in einem Blockdiagramm das Zusammenwirken einzelner für die Durchführung des erfindungsgemäßen Verfahrens erforderlichen Komponenten. Zunächst ist die Betätigungseinrichtung 32 aufgeführt, mittels der eine Bremsverzögerung des Arbeitsfahrzeugs 10 kommandiert werden kann. Die Betätigungseinrichtung 32 steht in einer Steuerungsverbindung mit dem Mikrokontroller 42₁, der Teil der elektronische Kontrolleinheit 42 ist. Auf dem Mikrokontroller 42₁ sind Fahrstrategien hinterlegt, in denen beispielsweise Getriebeschaltstrategien abgelegt sind. Weiterhin übernimmt der Mikrokontroller 42₁ die Steuerung von Subsystemen, beispielsweise die Ansteuerung eines bedarfsweise zuschaltbaren Vorderradantriebs oder die Ansteuerung des Getriebes 16 in Abhängigkeit einer Schaltstrategie. Mit der Betätigungseinrichtung 32 und dem Mikrokontroller 42₁ ist ein Mikrokontroller 42₂ steuerungsmäßig verbunden. Der Mikrokontroller 42₂ dient der Ansteuerung der Hilfsbremseinrichtung 50. Das erfindungsgemäße Verfahren erreicht, in Abhängigkeit der Verfügbarkeit im jeweiligen Fahrzustand, die von der Bedienperson kommandierte Bremsverzögerung zunächst durch Verwendung der Hilfsbremseinrichtung 50 und zwar solange die mit der Hilfsbremseinrichtung 50 erreichte Bremsverzögerung aₐᵤₓ unterhalb eines Wertes aₛₒₗₗ der Bremsverzögerung liegt. Hierbei wird die Hilfsbremseinrichtung 50 durch den Mikrokontroller 42₂ angesteuert. Kann die kommandierte Bremsverzögerung aₛₒₗₗ nicht oder nicht vollständig durch die Hilfsbremseinrichtung 50 zur Verfügung gestellt werden, steuert der Mikrokontroller 42₁ die Betriebsbremseinrichtung 30 an.

Das erfindungsgemäße Verfahren kann sich weiterhin darauf erstrecken, dass das Getriebe 16 in Richtung einer größeren Übersetzung mittels eines Übersetzungshebels verstellt wird, wobei der Übersetzungshebel von der Betätigungseinrichtung 32 umfasst sein kann. Durch die eingestellte größere Übersetzung des Getriebes 16 wird zusätzliche Bremsleistung von dem Hilfsbremssystem 50 bereitgestellt. Hierzu werden durch den Mikrokontroller 42₁ die entsprechenden Getriebevariablen wie Drehzahl oder derzeitige Übersetzung und weitere Bedingungen überprüft.

Das erfindungsgemäße Verfahren kann auch für eine Drehzahlregelung des Antriebsmotors 14 genutzt werden. Hierbei wird die Hilfsbremseinrichtung 50 im Schubbetrieb angesteuert. Hierdurch lässt sich ein Überdrehzahlschutz durch automatisches Ansteuern der Hilfsbremseinrichtung 50 bei Überschreitung einer Drehzahlgrenze bei gleichzeitiger Unterschreitung einer Drehmomentgrenze darstellen.

Durch ein Ansteuern der Hilfsbremseinrichtung 50 während einer Warmlaufphase des Antriebsmotors 14 kann ein schnelleres Aufheizen des Antriebsmotors 14 und einer Hydraulikanlage des Arbeitsfahrzeugs 10 erreicht, da durch die Hilfsbremseinrichtung 50 eine künstliche Last generiert wird.

Im Zusammenhang mit der Figur 1 wurde als mögliche Ausführungsform der Hilfsbremseinrichtung 50 ein hydrostatischer Retarder beschrieben. Hierzu können entweder alternative Systeme oder parallel zusätzliche Systeme zum Einsatz kommen. Hierzu zählen eine variable Turbinengeometrie eines Abgasturboladers, eine Wirbelstrombremse, ein Abgasbremse, eine Hydrauliksystembremse, eine Kombination aus Generator, Umrichter und Bremswiderstand oder eine generatorisch betriebene elektrische Triebachse in einem angehängten Arbeitsgerät. Auch kann die Hilfsbremseinrichtung 50 auf dem Arbeitsfahrzeug 10 an sich oder einem Anbaugerät angeordnet sein. Jedes der genannten Hilfsbremseinrichtungen kann sowohl eigenständig, als auch in einfacher oder mehrfacher Kombination mit anderen Hilfsbremseinrichtungen zum Einsatz kommen. Prinzipiell ist jeder zuschaltbare Verbraucher, der eine Last auf den Antriebsmotor aufbringen kann, als Hilfsbremseinrichtung nutzbar. Die Last kann über einen elektrischen Pfad, einen mechanischen Pfad oder eine hydraulischen Pfad hinzugeschaltet werden. Zumindest mittelbar entnehmen alle Hilfsbremseinrichtungen ihre Bremsleistung der Kurbelwelle des Antriebsmotors.

### Bezugszeichenliste

- 10: Arbeitsfahrzeug
- 12: Antriebsstrang
- 14: Antriebsmotor
- 16: Getriebe
- 18: Antriebsachse
- 20: Antriebsräder
- 22: Kabine
- 24: Differentialgehäuse
- 26: Kurbelwelle
- 30: Betriebsbremseinrichtung
- 32: Betätigungseinrichtung
- 34: Bremseinheit
- 36: Positionssensor
- 38: Drucksensor
- 40: Beschleunigungssensor
- 42: elektronische Kontrolleinheit
- 42₁, 42₂: Mikrokontroller
- 50: Hilfsbremseinrichtung

## Patentansprüche

1. Verfahren zur Ansteuerung eines Bremssystems in einem landwirtschaftlichen Arbeitsfahrzeug (10), wobei das Arbeitsfahrzeug (10)
einen Antriebsstrang (12) mit einem Antriebsmotor (14),
ein dem Antriebsmotor (14) nachgeschaltetes Getriebe (16) mit verstellbarer Übersetzung, über das eine von dem Antriebsmotor (22) erzeugte Antriebsleistung auf eine Antriebsachse (18) übertragbar ist,
eine Betriebsbremseinrichtung (30) und zumindest eine Hilfsbremseinrichtung (50) und
eine Betätigungseinrichtung (32), mittels der eine eine Bremsverzögerung charakterisierende Verzögerungsgröße (aₛₒₗₗ) des Arbeitsfahrzeugs (10) auf die Betriebsbremseinrichtung (32) und die zumindest eine Hilfsbremseinrichtung (50) kommandiert werden kann, umfasst
wobei über die Betätigungseinrichtung (32) die zumindest eine Hilfsbremseinrichtung (50) solange prioritär gegenüber der Betriebsbremseinrichtung (32) angesteuert wird, solange die von der zumindest einen Hilfsbremseinrichtung (50) zur Verfügung gestellte Verzögerungsgröße (aₐᵤₓ) die kommandierte Verzögerungsgröße (aₛₒₗₗ) zu decken vermag und eine Ansteuerung der Betriebsbremseinrichtung (50) erst erfolgt, wenn die kommandierte Verzögerungsgröße (aₛₒₗₗ) die maximale durch die zumindest eine Hilfsbremseinrichtung (50) erreichbare Verzögerungsgröße (aₐᵤₓ) übersteigt.

2. Verfahren zur Ansteuerung eines Bremssystems nach Anspruch 1, **dadurch gekennzeichnet, dass** die Betätigungseinrichtung (32) durch eine Bedienperson des Arbeitsfahrzeugs aktivierbare Bedienmittel umfasst.

3. Verfahren zur Ansteuerung eines Bremssystems nach Anspruch 1, **dadurch gekennzeichnet, dass** es sich bei den Bedienmitteln (32) um ein Bremspedal oder einen Fahrhebel des Arbeitsfahrzeugs handelt.

4. Verfahren zur Ansteuerung eines Bremssystems nach einem der Ansprüche 1 bis 3, **dadurch gekennzeichnet, dass** das zumindest eine Hilfsbremskraftsystem (50) seine Bremsleistung einer Kurbelwelle (26) des Antriebsmotors (14) aufprägt.

5. Verfahren zur Ansteuerung eines Bremssystems nach einem der Ansprüche 1 bis 4, **dadurch gekennzeichnet, dass** zumindest während eines der Hilfsbremssysteme (50) prioritär angesteuert wird, eine Übersetzung des Getriebes (16) in Richtung einer größeren Übersetzung verstellt wird.

6. Verfahren zur Ansteuerung eines Bremssystems nach einem der Ansprüche 1 bis 5, **dadurch gekennzeichnet, dass** das Arbeitsfahrzeug eine elektronische Kontrolleinheit (42) umfasst, wobei die elektronische Kontrolleinheit (42) das zumindest eine Hilfskraftbremssystem bei Überschreitung einer Drehzahlgrenze des Antriebsmotors bei gleichzeitiger Unterschreitung einer Drehmomentgrenze des Antriebsmotors ansteuert.
